# EUROPEAN PATENT APPLICATION

(11) **EP 3 536 486 A1**
(43) Date of publication of application: **11.09.2019**
(21) Application number: 18179143.5
(22) Date of filing: 21.06.2018
(51) Int. Cl.: B29C 64/393, B33Y 50/02, B29C 64/124, B33Y 10/00, B33Y 30/00, B29C 64/20

(54) **3D PRINTER CAPABLE OF REAL-TIME ADJUSTING PRINTING TIME AND REAL-TIME PRINTING METHOD OF USING SAME**

(30) Priority: 08.03.2018 CN 201810191547
(71) Applicant: XYZprinting, Inc., New Taipei City 22201 (TW); Kinpo Electronics, Inc., New Taipei City 22201 (TW)
(72) Inventor: CHANG, Cheng-Kuan, 22201 New Taipei City (TW)
(74) Representative: 2K Patentanwälte Blasberg Kewitz & Reichel

(57) **Abstract**

A 3D printer (1) capable of real-time adjusting printing time and real-time printing method of using same are provided. The 3D printer (1) includes a tank (11) for containing liquid material (2), a printing platform (12), an illumination unit (13), a temperature sensor (14), and a processor (10). Before printing, the processor (10) obtains an initial temperature from the temperature sensor (14). When printing, the processor (10) obtains slicing information of one cured layer, and activates both the printing platform (12) and the illumination unit (13) to create a slicing object of the cured layer based on the slicing information. Next, the processor (10) instructs the 3D printer (1) to wait, and senses the current temperature of the liquid material (2). The 3D printer (1) performs steps to create a 3D model after determining that heat of the liquid material (2) is dissipated.

## Description

### BACKGROUND OF THE INVENTION

### 1. Technical Field

The technical field relates to three-dimensional (3D) printing, and more particularly relates to a 3D printer capable of real-time adjusting printing time and a real-time printing method of using the 3D printer.

### 2. Description of Related Art

3D printers are widely used in recent years due to advancements of technologies, compactness of the 3D printer, and greatly decreased price.

Currently, all types of 3D printer available on the commercial market slice an object in a unit of one layer. That is, a slicing object of a layer is printed in one step. A complete 3D model is created by adding a plurality of slicing objects together.

Taking a digital light processing (DLP) 3D printer as an example, the DLP 3D printer activates an illumination unit to emit light toward liquid material contained in a tank based on the pattern of a cured layer. The lit portions of the liquid material cure and create a slicing object having the corresponding pattern. The 3D printer repeatedly performs above steps to create a 3D model by adding a plurality of slicing objects of the cured layer together.

After the illumination unit emitting light toward liquid material contained in a tank, the lit portions of the liquid material cure and temperature of the unlit portions thereof increases due to the illumination. The higher of the liquid material is, the quicker of the reaction is. In other words, temperature of the liquid material in the tank will increase greatly (i.e., heat being accumulated) if heat generated during the printing process (i.e., the liquid material being continuously illuminated by the illumination unit) is not sufficiently dissipated. And in turn, the reaction rate of the cured layer is different from the predetermined reaction rate thereof. As a result, quality of the created 3D model is adversely affected (i.e., the liquid material being over-cured).

Further, different liquid materials (e.g., different materials, different brands, etc.) have different features. Thus, the different liquid materials may experience different reaction rates even in the same manufacturing temperature. Thus, in an example of a fixed waiting time set by the 3D printer and different liquid materials, qualities of the created 3D models may be varied greatly. Thus, the need for improvement still exists.

### SUMMARY OF THE INVENTION

The disclosure is directed to a 3D printer capable of real-time adjusting printing time and real-time printing method of using same so that after the 3D printer creating a slicing object, waiting time of a next slicing object creation is real-time adjusted based on the current temperature of the liquid material in order to ensure quality of a 3D model to be created.

It is therefore one object of the invention to provide a 3D printer capable of real-time adjusting printing time comprising a temperature sensor; a processor connected to the temperature sensor and configured to receive an initial temperature from the temperature sensor before printing, and obtain slicing information of one of a plurality of cured layers of a 3D object in printing; a tank for storing liquid material; a printing platform disposed above a bottom of the tank and electrically connected to the processor so that the processor is configured to immerse the printing platform in the liquid material; and an illumination unit disposed under the tank and electrically connected to the processor so that the illumination unit is configured to emit light toward inside of the tank and a slicing object of the cured layer is created on the printing platform as controlled by the processor based on the slicing information; wherein after creating the cured layer the processor instructs the 3D printer to wait, the temperature sensor measures a current temperature of the liquid material and sends the current temperature to the processor , the processor compares the current temperature of the liquid material with the initial temperature to determine whether the current temperature of the liquid material decreases to a temperature appropriate for creating a next slicing object, and after the current temperature of the liquid material decreasing to the temperature appropriate for creating a next slicing object, a next slicing object of the cured layer is created on the printing platform as controlled by the processor.

It is another object of the invention to provide a real-time printing method of using a 3D printer including a tank for storing liquid material, a printing platform disposed above a bottom of the tank, an illumination unit disposed under the tank, a temperature sensor, and a processor connected to the printing platform, the illumination unit, and the temperature sensor, comprising the steps of a) sending an initial temperature from the temperature sensor to the processor before printing; b) causing the processor to obtain slicing information of one of a plurality of cured layers of a 3D object in printing; c) immersing the printing platform in the liquid material, activating the illumination unit to emit light toward inside of the tank, and creating a slicing object of the cured layer on the printing platform as controlled by the processor based on the slicing information; d) after creating the cured layer instructing the 3D printer to wait, instructing the temperature sensor to measure a current temperature of the liquid material both as controlled by the processor, and sending the current temperature of the liquid material to the processor; e) causing the processor to compare the current temperature of the liquid material with the initial temperature to determine whether the current temperature of the liquid material decreases to a temperature appropriate for creating a next slicing object; f) looping back to step d) if the determination in step e) is negative; g) creating a next slicing object of the cured layer on the printing platform as controlled by the processor if the determination in step e) is positive; h) determining whether a 3D model is created as controlled by the processor; and i) looping back to step b) if the determination in step h) is negative.

The invention has the following characteristics: After creating a slicing object of a cured layer, the 3D printer waits for a period of time based on the measured temperature of the liquid material so that both temperature of the liquid material and reaction rate thereof can be kept at an optimum, chemical reactions occurred at curing each slicing object are substantially the same or similar, and quality of the created 3D model is excellent.

The above and other objects, features and advantages of the invention will become apparent from the following detailed description taken with the accompanying drawings.

### BRIEF DESCRIPTION OF THE DRAWINGS

FIG. 1 is a side elevation in part section of a 3D printer according to a first preferred embodiment of the invention;
FIG. 2 is a block diagram of the 3D printer;
FIG. 3 is a block diagram of a 3D printer according to a second preferred embodiment of the invention;
FIG. 4 illustrates real-time printing according to the invention;
FIG. 5 is a flowchart illustrating a real-time printing method according to the invention; and
FIG. 6 is a side elevation in part section of a 3D printer according to a third preferred embodiment of the invention.

### DETAILED DESCRIPTION OF THE INVENTION

Embodiments of the invention will now be described, by way of example only, with reference to the accompanying drawings.

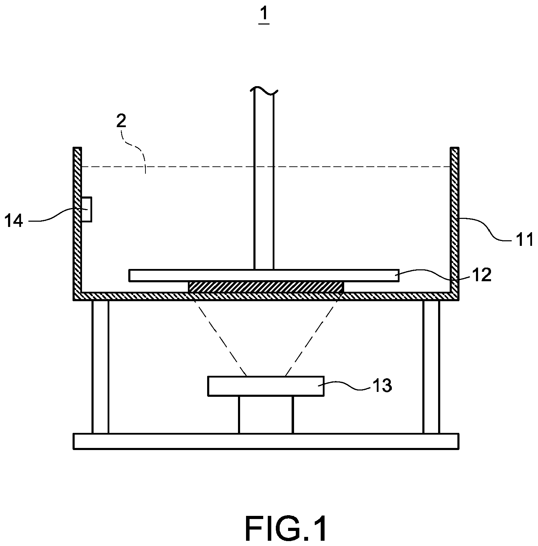

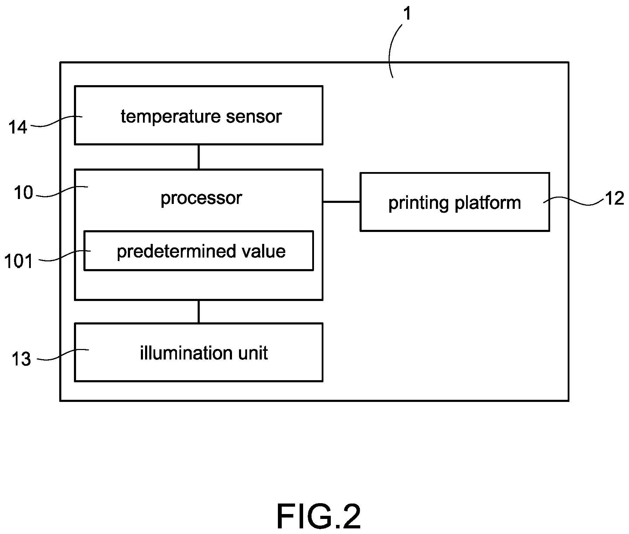

Referring to FIGS. 1 and 2 in which FIG. 1 is a side elevation in part section of a 3D printer 1 according to a first preferred embodiment of the invention, and FIG. 2 is a block diagram of the 3D printer respectively. The 3D printer 1 is capable of real-time adjusting printing time. In FIGS. 1 and 2, the 3D printer 1 is implemented as a digital light processing (DLP) 3D printer or a stereolithography (STL) 3D printer. The invention aims at real-time adjusting printing time of the 3D printer 1 to prevent heat from accumulating in creating a 3D object by adding liquid material (e.g., liquid molecules) together or fusing solid material (e.g., powder grains) together. Otherwise, quality of the 3D object may be adversely affected. It is envisaged by the invention that printers other than above are within the scope of the invention if they generate heat in printing.

Either a DLP 3D printer or an STL 3D printer is taken as an exemplary example in discussing the invention in FIGS. 1 and 2 for the sake of description. It is noted that the invention is not limited to such.

In the first embodiment of FIGS. 1 and 2, the 3D printer 1 comprises a tank 11 for storing liquid material 2, a printing platform 12 disposed above a bottom of the tank 11, an illumination unit 13 disposed under the tank 11, a temperature sensor 14 disposed on an inner surface of the tank 11 and immersed in the liquid material 2, and a processor 10 electrically connected to the printing platform 12, the illumination unit 13, and the temperature sensor 14.

One aspect of the invention is described below. Prior to printing a 3D model, the temperature sensor 14 measures an initial temperature of the liquid material 2, the temperature sensor 14 measures an immediate next temperature of the liquid material 2 after a first printing, and determines whether a second printing is to be conducted based on a difference between the initial temperature and the immediate next temperature.

Specifically, a user may operate an externally disposed computer or activate the 3D printer 1 to instruct the processor 10 to read a 3D file, open a 3D object recorded in the 3D file, convert the 3D object into a series of thin layers, and produce slicing information of a plurality of cured layers (or called printing layers), i.e., slicing processing. The slicing processing is known in the art of 3D printing and thus a detailed description thereof is omitted herein for the sake of brevity.

Prior to printing, the temperature sensor 14 sends the measured initial temperature to the processor 10. In the first embodiment, the temperature sensor 14 is disposed on the inner surface of the tank 11 and immersed in the liquid material 2, and the initial temperature is measured by the temperature sensor 14 before the illumination unit 13 emits light to the liquid material 2.

In an embodiment other than the first embodiment, the initial temperature is an ambient temperature of the 3D printer 1 or an internal temperature of the 3D printer 1 such as temperature of the 3D printer 1 or temperature of an internal component (e.g., the processor 10 or a motor) of the 3D printer 1. Before printing, temperature of the liquid material 2 is equal to (or near) the ambient temperature or the temperature of the 3D printer 1. Thus, the processor 10 may take the ambient temperature or the temperature of the 3D printer 1 as the temperature of the liquid material 2.

After receiving the initial temperature, the processor 10 performs a 3D printing process.

During the 3D printing process, the processor 10 obtains the slicing information of one of the cured layers (e.g., the first layer) of the 3D object. Next, the processor 10 lowers the printing platform 12 (i.e., along Z-axis of the 3D printer 1) until the printing platform 12 is immersed in the liquid material 2 and disposed above the bottom of the tank 11. In this position, a distance between the printing platform 12 and the bottom of the tank 11 is defined as a thickness of the cured layer. In the first embodiment, the thickness of the cured layer is equal to (or near) a predetermined thickness of curing but not limiting.

Next, the processor 10 activates the illumination unit 13 to emit light into the tank 11. Specifically, the illumination unit 13 emits light toward the printing platform 12 through the underside of the tank 11. Also, light emitted by the illumination unit 13 emits a shape of the slicing object indicated by the slicing information. Thus, the lit portions of the liquid material 2 cure and adhere to the printing platform 12 to create a slicing object (not numbered) of the cured layer.

After printing a slicing object of the cured layer, the processor 10 instructs the 3D printer 1 to wait, i.e., moving the printing platform 12 to an initial position and instructs the illumination unit 13 to stop emitting light. Next, the temperature sensor 14 measures current temperature of the liquid material 2 and sends the measured temperature to the processor 10. As a result, temperature change of the liquid material 2 in response to the illumination can be measured continuously.

In the first embodiment, the temperature sensor 14 measures current temperature of the liquid material 2 and sends the measured temperature to the processor 10. Further, the processor 10 determines whether heat generated by the illumination is dissipated based on the current temperature and the initial temperature. In other words, in the invention the processor 10 compares the current temperature of the liquid material 2 with the initial temperature thereof in order to determine when to create a slicing object of a next cured layer.

As described above, if the comparison result indicates that the difference between the initial temperature and the current temperature of the liquid material 2 is greater than a predetermined value (e.g., the initial temperature is 20°C and the current temperature of the liquid material 2 is 40°C), the processor 10 determines that heat is accumulated. Next, the processor 10 instructs the 3D printer 1 to further wait so that energy of the liquid material 2 may be sufficiently lost until temperature of the liquid material 2 reaches a predetermined value.

Specifically, the processor 10 determines whether temperature of the liquid material 2 decreases to a value less than a predetermined temperature by comparing the current temperature of the liquid material 2 with the initial temperature. If yes, a next slicing object is created. In the invention, at the predetermined temperature the processor 10 may activate the illumination unit 13 to emit light toward the liquid material 2 without adversely affecting printing quality.

In an embodiment, the temperature sensor 14 measures current temperature of the liquid material 2 and sends the measured temperature to the processor 10. Further, the processor 10 determines that heat generated due to illumination is dissipated if the current temperature of the liquid material 2 decreases to a value equal to the initial temperature. That is, in the embodiment, the temperature appropriate for creating a next slicing object is the initial temperature.

In another embodiment, a predetermined value 101 (e.g., 2°C or 5°C) is stored in the processor 10. In the embodiment, the temperature appropriate for creating a next slicing object is a sum of the initial temperature and the predetermined value 101. The processor 10 determines whether temperature of the liquid material 2 decreases to a value less than a predetermined temperature by comparing the current temperature of the liquid material 2 with the initial temperature. If yes, a next slicing object is created. That is, it is determined whether temperature of the liquid material 2 has decreased to a value equal to the sum of the initial temperature and the predetermined value 101. In other words, it is determined whether a difference between the current temperature of the liquid material 2 and the initial temperature is no more than the predetermined value 101. In an example, the predetermined value 101 is 5°C, the initial temperature is 20°C, and the temperature sensor 14 measures current temperature of the liquid material 2 and sends the measured temperature to the processor 10. Further, the processor 10 determines that heat is dissipated if the current temperature of the liquid material 2 decreases to a value no more than 25°C. In other words, the current temperature of the liquid material 2 has decreased to a value appropriate for creating a next slicing object.

As described above, in response to determining that heat has been sufficiently dissipated (i.e., the current temperature of the liquid material 2 has decreased to a value appropriate for creating a next slicing object), the processor 10 obtains slicing information of a next cured layer (e.g., the second layer) of the 3D object and instructs the printing platform 12, the illumination unit 13 and the temperature sensor 14 to repeatedly perform above steps. As a result, a 3D model (not numbered) is created by adding a plurality of slicing objects together.

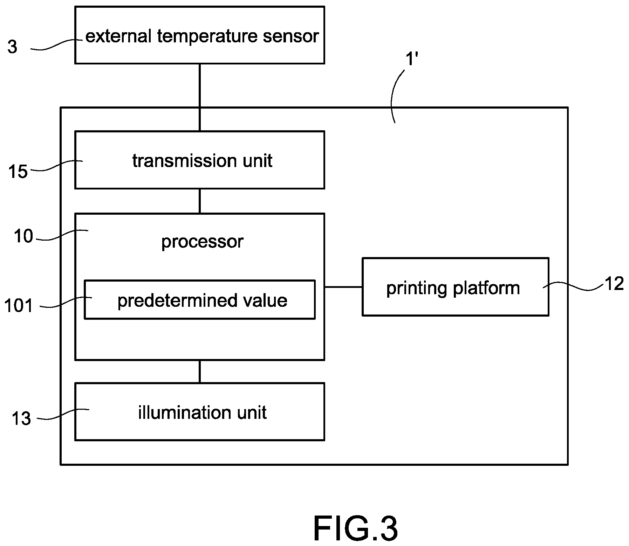

Referring to FIG. 3, it is a block diagram of a 3D printer according to a second preferred embodiment of the invention. The 3D printer is labeled 1'. In comparison with the 3D printer 1 of FIG. 2, the 3D printer 1' further comprises a transmission unit 15 electrically connected to the processor 10. In the second embodiment of FIG. 3, no temperature sensor is provided in the 3D printer 1' and the temperature measurement is performed by an external temperature sensor 3 which sends the measured temperature to the processor 10 via the transmission unit 15.

In the embodiment, the transmission unit 15 is implemented as a port (e.g., connector), a wire transmission unit (e.g., cable), or a wireless transmission unit (e.g., Bluetooth® module or Wi-Fi module). A user may use the external temperature sensor 3 to measure the initial temperature of the liquid material and the current temperature thereof. The measured initial temperature of the liquid material and the current temperature thereof are sent to the processor 10 via the transmission unit 15. Thus, space occupied by the 3D printer 1' and the manufacturing cost of the 3D printer 1' are decreased greatly.

The 3D printer 1 of the invention is instructed to wait after creating a slicing object until the temperature of the liquid material 2 decreases to a temperature appropriate for creating a next slicing object (i.e., being equal to the initial temperature or being a sum of the initial temperature and the predetermined value 101). Thereafter, a next step of creating a slicing object is performed. Therefore, it is possible of ensuring the temperature of the liquid material 2 in the tank 11 to be equal to (or near) the initial temperature when printing a slicing object of each cured layer. As a result, quality of the created 3D model is greatly improved.

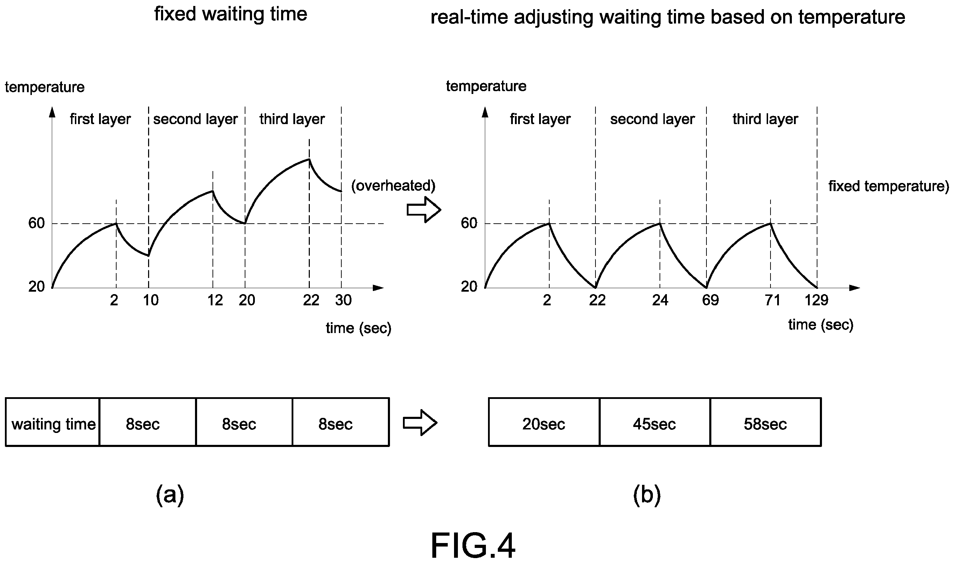

Referring to FIG. 4, it illustrates real-time printing according to the invention.

As shown in a first configuration in the left (a) of FIG. 4, after creating the slicing object of each cured layer, the 3D printer waits a fixed period of time (e.g., 8 seconds) with a fixed illumination time (e.g., 2 seconds).

As shown in the first configuration in the left (a) of FIG. 4, before creating the slicing object of the first layer, the initial temperature of the liquid material is 20°C. After the illumination unit emitting light toward the tank and waiting for 2 seconds, the temperature of the liquid material rises from 20°C to 60°C (i.e., overheated). After creating the slicing object of the first layer, the 3D printer waits for 8 seconds. The temperature of the liquid material gradually decreases during the eight-second period. However, the 3D printer starts to create the slicing object of a second layer before the temperature of the liquid material returning to the initial temperature (i.e., 20°C). After creating the slicing object of the second layer, the 3D printer still waits for fixed 8 seconds. Thus, the temperature of the liquid material rises again.

Likewise, after eight seconds being lapsed, the 3D printer creates the slicing object of a third layer. After creating the slicing object of the third layer, the 3D printer still waits for 8 seconds. In the first configuration, the temperature of the liquid material continues to rise during the printing process. As such, the printing process accelerates. However, the heat inside the liquid material is accumulated so the created slicing objects may be over-cured to different extents, thereby adversely affecting quality of the created 3D model.

As shown in a second configuration in the right (b) of FIG. 4, after creating the slicing object of each cured layer, the 3D printer continuously monitors temperature change of the liquid material in order to set a waiting time (i.e., when to create a next layer). Thus, it is possible of solving the problem of heat accumulation.

Specifically, after creating the slicing object of the first layer having a predetermined illumination time of 2 seconds, the temperature of the liquid material rises from 20°C to 60°C. After creating the slicing object of the first layer, the 3D printer is aware that the current temperature of the liquid material in the tank is 60°C as shown in the right (b) of FIG. 4. Further, the 3D printer waits until the temperature of the liquid material returns to the initial temperature (20°C) or decreases to a temperature that is appropriate for creating a next slicing object (e.g., a sum of the initial temperature and a predetermined value of n°C). The waiting time is 20 seconds as shown in the right (b) of FIG. 4. Next, the slicing object of a second layer is created.

After creating the slicing object of the second layer having a predetermined illumination time of 2 seconds, the 3D printer is aware of the current temperature of the liquid material in the tank. Further, the 3D printer waits until the temperature of the liquid material returns to a temperature appropriate for creating a next slicing object (e.g., the initial temperature 20°C or a sum of the initial temperature and a predetermined value 101. The waiting time is 45 seconds as shown in the right (b) of FIG. 4. Next, the slicing object of a third layer is created.

There are many factors may change temperature of the liquid material during the printing process. The factors include ambient temperature, tank capacity, volume of liquid material, kinds of liquid material, power of illumination unit, and thickness of cured layer. After creating the slicing object, in comparison of waiting a fixed period of time prior to a next slicing object creation, the 3D printer of the invention is capable of real-time adjusting printing time by continuously monitoring temperature change of the liquid material. Thus, the invention can precisely control the start and the stop of creating a slicing object, thereby greatly improving printing quality.

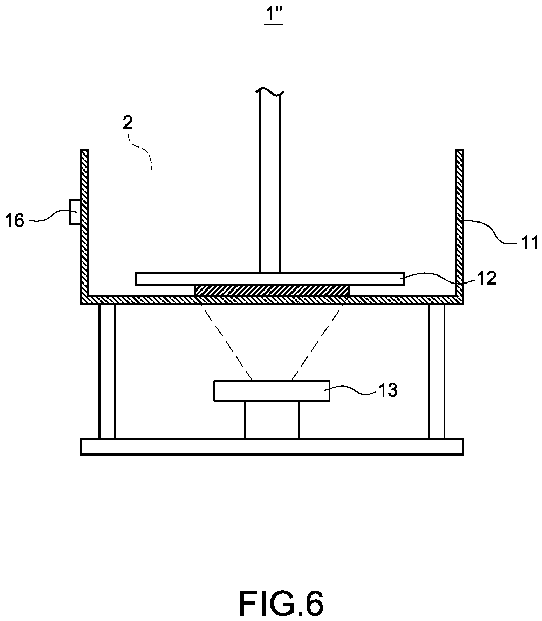

Referring FIG. 6, it is a side elevation in part section of a 3D printer according to a third preferred embodiment of the invention. The 3D printer is labeled 1". In comparison with the 3D printer 1 of FIG. 1 and the 3D printer 1' of FIG. 3, the 3D printer 1" has the following characteristics: The 3D printer 1" further comprises a heat sink 16 provided on an outer surface of a tank 11 and electrically connected to the processor (not shown). As shown in the third preferred embodiment of FIG. 6, the heat sink 16 is implemented as a pin fin heat sink and adhered to the outer surface of the tank 11. In other embodiments, the heat sink 16 is implemented as a fan disposed above the tank 11, a condenser disposed either internally or externally of the tank 11, or a combination of above and not limiting.

As discussed above, it is envisaged by the technical solutions of the invention, after creating a slicing object of a cured layer, the 3D printer 1 waits a period of time (i.e., waiting temperature of the liquid material 2 to decrease) prior to creating the slicing object of a next cured layer. By utilizing the 3D printer 1" having the heat sink 16, temperature rise of the liquid material 2 in creating the slicing object of a cured layer is relatively small and the liquid material 2 may quickly dissipate heat to decrease its temperature thereafter. As a result, cooling time is decreased (i.e., the waiting time being shortened). In the embodiment, prior to activating the 3D printer 1" to print, the processor 10 may activate the heat sink 16. Next, the step of creating a slicing object is performed. As a result, the waiting time is greatly decreased.

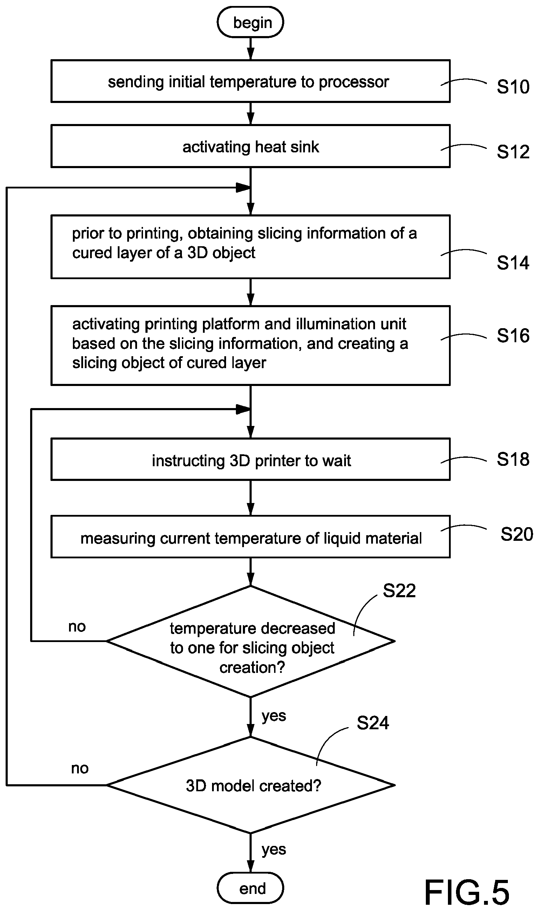

Referring to FIG. 5, it is a flowchart illustrating a real-time printing method (called printing method hereinafter) according to the invention, the printing method using the 3D printer of the first preferred embodiment shown in FIG. 1. The printing method is applicable to any 3D printer as long as it generates heat during the printing process. For the sake of discussion, the printing method of the invention will be illustrated in conjunction with the 3D printer 1 shown in FIGS. 1 and 2 but not limiting to the DLP 3D printer or the STL 3D printer.

Prior to printing, the temperature sensor 14 sends an initial temperature to the processor 10 (step S10).

In an embodiment, the temperature sensor 14 is a temperature sensor disposed within the 3D printer 1 for measuring temperature of the 3D printer 1 and/or temperature of internal components of the 3D printer 1 (i.e., measured temperature in the 3D printer 1). The temperature of the liquid material 2 is equal to (or near) the temperature of the 3D printer 1 (or the temperature of the internal components of the 3D printer 1) prior to printing. Thus, the temperature sensor 14 may send the measured temperature of the 3D printer 1 to the processor 10 and the temperature of the 3D printer 1 is taken as an initial temperature of the liquid material 2.

In another embodiment, the temperature sensor 14 is disposed externally of the 3D printer 1 (see the external temperature sensor 3 of FIG. 3 which measures the ambient temperature of the 3D printer 1 and sends the measured temperature to the processor 10 via the transmission unit 15). Both the temperature of the liquid material 2 and the temperature of the 3D printer 1 are equal to (or near) the ambient temperature prior to printing. Thus, the external temperature sensor 3 may send the measured ambient temperature to the processor 10 and the ambient temperature is taken as an initial temperature of the liquid material 2.

In still another embodiment, the temperature sensor 14 is disposed internally of the 3D printer 1 and contacts the liquid material 2 directly (see the temperature sensor 14 in the tank 11 of FIG. 1). The temperature sensor 14 may measure temperature of the liquid material 2. Prior to printing, the temperature sensor 14 measures the temperature of the liquid material 2 and sends the measured temperature to the processor 10 and the measured temperature is taken as an initial temperature of the liquid material 2.

After obtaining above initial temperature, the 3D printer 1 begins to print. In the embodiment that the 3D printer (e.g., the 3D printer 1" of FIG. 6) has the heat sink 16, the 3D printer 1" may instruct the processor 10 to activate the heat sink 16 prior to printing (step S12). As a result, heat is effectively dissipated.

Specifically, prior to printing, the processor 10 obtain slicing information of a cured layer (e.g., a first layer) of a 3D object (step S14). Next, the processor 10 activates both the printing platform 12 and the illumination unit 13 based on the slicing information. As a result, a slicing object of the cured layer is created (step S16).

Specifically, in step S16, the processor 10 lowers the printing platform 12 (i.e., along Z-axis of the 3D printer 1) until the printing platform 12 is immersed in the liquid material 2 and disposed above the bottom of the tank 11 by a distance equal to a thickness of a cured layer. Next, the processor 10 activates the illumination unit 13 to emit light into the tank 11. The lit portions of the liquid material 2 cure and adhere to the printing platform 12 to create a slicing object of the cured layer.

After creating the slicing object, the processor 10 instructs the 3D printer 1 to wait (step S18). Further, the temperature sensor 14 measures current temperature of the liquid material 2 and sends the measured temperature to the processor 10 (step S20). The processor 10 compares the current temperature of the liquid material 2 with the initial temperature thereof obtained at step S10 in order to determine whether temperature of the liquid material 2 decreases to a temperature appropriate for creating a next slicing object (step S22). In other words, in step S22, the processor 10 determines whether heat is accumulated in the liquid material 2 by comparing the current temperature of the liquid material 2 with the initial temperature thereof.

In an embodiment, the processor 10 is aware of the current temperature of the liquid material 2 as informed by the temperature sensor 14. The temperature appropriate for creating a next slicing object is set as the initial temperature. That is, if the temperature of the liquid material 2 decreases to a value equal to the initial temperature, the processor 10 determines that heat is sufficiently dissipated.

In another embodiment, a predetermined value 101 is set by the processor 10. The predetermined value 101 is a temperature difference that is acceptable to user. The temperature appropriate for creating a next slicing object is a sum of the initial temperature and the predetermined value 101. In the step S22, the processor 10 is aware of the current temperature of the liquid material 2 as informed by the temperature sensor 14. The processor 10 compares the current temperature of the liquid material 2 with the initial temperature. If the current temperature of the liquid material 2 is equal to a sum of the initial temperature and the predetermined value 101 (i.e., lowering to a temperature appropriate for creating a next slicing object), the processor 10 determines that heat is sufficiently dissipated.

The flowchart loops back to step S18 if the current temperature of the liquid material 2 does not lower to a temperature appropriate for performing a next printing. Otherwise (i.e., the current temperature of the liquid material 2 having lowered to a temperature appropriate for performing a next printing and heat of the liquid material 2 being sufficiently dissipated), the flowchart proceeds to step S24 to determine whether a 3D model corresponding to the 3D object has been created. If the determination in step S24 is negative, the flowchart loops back to step S14 and the processor 10 performs steps of obtaining slicing information of a next cured layer (e.g., a second layer), activating both the printing platform 12 and the illumination unit 13 to create a slicing object of a next cured layer, and causing the temperature sensor 14 to measure current temperature of the liquid material 2 and sending the measured temperature to the processor 10, determining whether temperature of the liquid material 2 decreases to a temperature appropriate for performing a next printing (i.e., heat being sufficiently dissipated), and determining whether a 3D model has been created.

The flowchart ends if the determination of step S24 is positive (i.e., a 3D model being created).

It is envisaged by the invention that by utilizing the 3D printer 1 capable of real-time adjusting printing time and a real-time printing method of using the 3D printer 1, the invention can effectively dissipate heat generated by liquid material during the printing process, thereby ensuring the creation of a quality 3D model.

## Claims

1. A 3D printer (1) capable of real-time adjusting printing time comprising:
a temperature sensor (14);
a processor (10) connected to the temperature sensor (14) and configured to receive an initial temperature from the temperature sensor (14) before printing, and obtain slicing information of one of a plurality of cured layers of a 3D object in printing;
a tank (11) configured for storing liquid material (2);
a printing platform (12) disposed above a bottom of the tank (11) and electrically connected to the processor (10) so that the processor (10) is configured to immerse the printing platform (12) in the liquid material (2); and
an illumination unit (13) disposed under the tank (11) and electrically connected to the processor (10) so that the illumination unit (13) is configured to emit light toward inside of the tank (11) and a slicing object of one cured layer is created on the printing platform (12) as controlled by the processor (10) based on the slicing information;
wherein after creating one cured layer the processor (10) is configured to instruct the 3D printer (1) to wait, the temperature sensor (14) is configured to measure a current temperature of the liquid material (2) and send the current temperature to the processor (10), the processor (10) is further configured to compare the current temperature of the liquid material (2) with the initial temperature to determine whether the current temperature of the liquid material (2) decreases to a temperature appropriate for creating a next slicing object, and after the current temperature of the liquid material (2) decreasing to the temperature appropriate for creating a next slicing object, a next slicing object of one cured layer is created on the printing platform (12) as controlled by the processor (10).

2. The 3D printer (1) as claimed in claim 1, wherein the initial temperature is an ambient temperature of the 3D printer (1) or an internal temperature of the 3D printer (1).

3. The 3D printer (1) as claimed in claim 1, wherein the temperature sensor (14) is immersed in the tank (11) to be in contact with the liquid material (2), and the initial temperature is a temperature of the liquid material (2).

4. The 3D printer (1) as claimed in claim 1, further comprising a transmission unit (15) electrically connected to the processor (10), wherein the temperature sensor (14) is an external temperature sensor (3) disposed externally of the 3D printer (1), and the external temperature sensor (3) is configured to send measured temperature to the processor (10) via the transmission unit (15).

5. The 3D printer (1) as claimed in claim 1, wherein the temperature appropriate for creating a next slicing object is the initial temperature.

6. The 3D printer (1) as claimed in claim 1, wherein a predetermined value (101) is stored in the processor (10), and the temperature appropriate for creating a next slicing object is a sum of the initial temperature and the predetermined value (101).

7. The 3D printer (1) as claimed in claim 1, further comprising a heat sink (16) disposed on an outer surface of the tank (11) and electrically connected to the processor (10) which is configured to activate the heat sink (16) to dissipate heat away from the liquid material (2) in the tank (11) in printing the 3D object.

8. A real-time printing method of using a 3D printer (1) including a tank (11) for storing liquid material (2), a printing platform (12) disposed above a bottom of the tank (11), an illumination unit (13) disposed under the tank (11), a temperature sensor (14), and a processor (10) connected to the printing platform (12), the illumination unit (13), and the temperature sensor (14), comprising the steps of:
a) sending an initial temperature from the temperature sensor (14) to the processor (10) before printing;
b) causing the processor (10) to obtain slicing information of one of a plurality of cured layers of a 3D object in printing;
c) immersing the printing platform (12) in the liquid material (2), activating the illumination unit (13) to emit light toward inside of the tank (11), and creating a slicing object of one cured layer on the printing platform (12) as controlled by the processor (10) based on the slicing information;
d) after creating the slicing object of one cured layer, instructing the 3D printer (1) to wait, instructing the temperature sensor (14) to measure a current temperature of the liquid material (2) both as controlled by the processor (10), and sending the current temperature of the liquid material (2) to the processor (10);
e) causing the processor (10) to compare the current temperature of the liquid material (2) with the initial temperature to determine whether the current temperature of the liquid material (2) decreases to a temperature appropriate for creating a next slicing object;
f) looping back to the step d) if the determination in the step e) is negative; and
g) creating a next slicing object of a next cured layer on the printing platform (12) as controlled by the processor (10) if the determination in the step e) is positive.

9. The real-time printing method as claimed in claim 8, wherein the initial temperature is an ambient temperature of the 3D printer (1) or an internal temperature of the 3D printer (1).

10. The real-time printing method as claimed in claim 8, wherein the temperature sensor (14) is immersed in the tank (11) to be in contact with the liquid material (2), and the initial temperature is a temperature of the liquid material (2).

11. The real-time printing method as claimed in claim 8, wherein the temperature appropriate for creating a next slicing object is the initial temperature.

12. The real-time printing method as claimed in claim 8, wherein a predetermined value (101) is stored in the processor (10), and the temperature appropriate for creating a next slicing object is a sum of the initial temperature and the predetermined value (101).

13. The real-time printing method as claimed in claim 8, wherein the 3D printer (1) further comprises a heat sink (16) disposed on an outer surface of the tank (11) and electrically connected to the processor (10) which activates the heat sink (16) to dissipate heat away from the liquid material (2) in the tank (11) in printing the 3D object.
